# EUROPEAN PATENT SPECIFICATION

(11) **EP 1 151 212 B1**
(45) Date of publication and mention of the grant of the patent: **19.11.2003**
(21) Application number: 00901457.2
(22) Date of filing: 01.02.2000
(51) Int. Cl.: F16G 11/00, F16C 1/14, A47C 7/46

(54) **CABLE ASSEMBLY CONNECTOR**
VERBINDUNGSVORRICHTUNG FÜR KABELANORDNUNG
CONNECTEUR D'ENSEMBLE A CABLE

(30) Priority: 02.02.1999 CA 2260619
(43) Date of publication of application: 07.11.2001
(73) Proprietor: Schukra of North America Ltd., Toronto, Ontario M5X 1B2 (CA)
(72) Inventor: COSENTINO, Christopher, Bolton, Ontario L7E 5R7 (CA); MAIER, Tony, Aurora, Ontario L4G 3S1 (CA); RIETVELD, Jack, Etobicoke, Ontario M9W 5G1 (CA); DEMIN, Igor, Windsor, Ontario M8Y 4W1 (CA)
(74) Representative: Banzer, Hans-Jörg, Dipl.-Ing.
(86) International application number: CA0000088
(87) International publication number: WO00046525

(56) References cited:
- EP-A- 0 434 660
- FR-A- 2 213 186
- US-A- 3 125 316
- US-A- 3 288 192
- US-A- 4 422 276
- US-A- 5 233 881
- US-A- 5 237 889
- PATENT ABSTRACTS OF JAPAN vol. 006, no. 267 (M-182), 25 December 1982 (1982-12-25) & JP 57 157813 A (SUZUKI JIDOSHA KOGYO KK), 29 September 1982 (1982-09-29)

## Description

### FIELD OF THE INVENTION

This invention relates to connections between a cable, conduit, rod or other tensile element and an object and, more particularly, to a connection between a cable assembly and a lumbar support basket.

### BACKGROUND OF THE INVENTION

Cables, conduits, rods and other tensile elements are used in a vast array of applications to apply a force to an object. For example, levers, valves, doors and other objects may be remotely actuated by attaching a first end of a tensile element to the object and providing an operator with a button, handle or other means to move a second end of the tensile element. Another common example is the use of a cable assembly comprising a cable inside of a conduit. A first end of the cable is attached to an object to be moved and a second end of the cable is attached to a handle, button or other operable element. The conduit is held in place so that moving the second end of the cable causes the cable to move relative to the conduit rather than moving the entire cable assembly. Such a cable assembly is useful for applying a tensile force to an object remotely without complicated arrangements of levers and rods.

In all of these applications, a connector must be used to attach the rod, cable, conduit or other tensile element to an object. Various sorts of connectors have been devised but are generally difficult or expensive to manufacture, difficult to connect to or disconnect from the object, or do not provide a secure connection to the object. For example, a tensile element can be permanently fastened to an object by welding, screws, rivets, or other fasteners. However, some such fasteners do not provide a removable connection and most require at least one tool to be used when connecting the tensile element to the object. Alternately, a tensile member can be connected to an object by a clevis, socket or other device which connects to a corresponding plate, hole, or ball etc. Although some of these connectors may be pre-assembled to avoid the need for tools on final assembly, these connections are generally complicated to manufacture and pre-assemble. For example, both clevises and ball and socket connectors require precise machining and, typically, threaded or welded connections to the tensile element, the object, or both. Less complicated alternates such as a hook formed at the end of the tensile element, however, are often unreliable, particularly because a force applied in a reverse direction may dislodge them.

From US-A-4,422,276 a connection according to the preamble of claim 1 is known. In particular, this connection comprises a connector having an upper abutment and a lower abutment, the upper abutment being engagable with a plate on a side opposite a side of the plate engagable by the lower abutment of the connector. The width of the upper abutment corresponds to the width of the lower abutment. The plate comprises a slot, the slot having a first part and a second part, and an end of the connector, which comprises the upper and lower abutments, being slidably engagable with the plate by inserting this end of the connector into the second part of the slot and sliding it generally from the second part of the slot to the first part of the slot. The width of the second part of the slot substantially corresponds to the width of the upper and lower abutments of the connector.

From US-A-3,288,192 a connection between a bolt having an enlarged, rounded head and a channel web is known. The channel web has an elongated opening whose one end is of a size to closely receive a squared shank portion of the bolt and whose other end is considerably larger and is of a size to readily pass the bolt head. The elongated opening of the channel web is formed by lancing a tongue from the general web leaving only the tongue end spaced from the end of the opening attached to the web. The tongue is bent rearwardly so that the bolt head is maintained against the rear face of the channel web by the free end of the tongue and the bolt is retained in the opening by engagement of the tongue free end with the head abutment of the bolt.

FR-A-2.213.186 discloses a similar connection between a tensile element and a plate, the plate having a slot with a first part and a second part which is wider than the first part. This connection uses a connector being attached to the tensile element, which has a lower abutment being engageable with the plate by inserting it through the second part of the slot and then sliding it generally from the second part of the slot to the first part of the slot. However, this connector does not have an upper abutment, and there is no retainer provided.

### SUMMARY OF THE INVENTION

It is an object of the present invention to provide a simple connection between a tensile element and an object that is inexpensive to manufacture and allows a tensile element to be easily, securely and removably connected to an object.

According to the present invention, this object is achieved by a connection as defined in claim 1. The dependent claims define preferred and advantageous embodiments of the invention.

The invention is directed at a connection between a tensile element and an object, the connection having a slotted plate, a connector and a retainer. The slotted plate is made of a sheet material attached to or part of the object in which a slot is formed having a first part and a second part. The second part of the slot is wider than the first part of the slot. The connector has a first end that is engageable with the tensile element and a second end that can be inserted into the second part of the slot and slid towards the first part of the slot to engage the plate in the area of the first part of the slot.

The second end of the connector has a lower abutment projecting from it that is wider than the first part of the slot but narrower than the second part of the slot so that it can pass through the second part of the slot but not the first part of the slot. The connector also has an upper abutment disposed from the first abutment. This upper abutment can be at the front of the connector or can project from the connector but at a distance from the lower abutment greater than the thickness of the sheet material. Thus, when the connector is slid into the first part of the slot, the upper abutment and lower abutment both contact the plate, but on opposite sides of the plate to resist rotation of the connector when a tensile force from the tensile element is applied to the connector.

When the connector is engaged with the plate in the first part of the slot, the retainer inhibits movement of the connector back towards the second part of the slot. The retainer is resilient and biased towards a position where it obscures at least part of the space in or adjacent to the second part of the slot. The retainer may be a separate part attached to the plate or a unitary construction of the plate made by leaving some or all of the material inside of the second part of the slot attached to one edge of the second part of the slot. The connector is releasable by first pressing the retainer against its bias to allow the connector to slide from the first part of the slot to the second part of the slot. The second part of the slot is longer than the lower abutment so that the retainer can deflect to allow the lower abutment to pass through the second part of the slot without the retainer being deformed beyond its resilient limit.

Tensile force is carried to the plate by the connector at least partially by the edges of the slot or a stop at the edge of the slot which provides a larger bearing surface if needed. The stop is preferably made of a unitary construction with the plate, for example by folding a portion of the plate within the first part of the slot upwards or downwards. The stop may be resilient to provide a shock adsorbing connection between connector and plate if needed. Further, the stop may be used to bias the connector against the retainer and the lower abutment shaped to inhibit downward motion of the retainer once the connector is engaged in the slot.

One use for such a connection is with seats having adjustable lumbar supports. The lumbar support may be made of a partially curved basket with first and second ends. The first end has a connection for a tensile element which is a cable end and the second end has a connection for a tensile element which is a conduit for the cable. By tensioning the cable, the first and first and second ends of the basket are pulled together which causes the basket to curve and project into the back of a person sitting on the chair.

### BRIEF DESCRIPTION OF THE DRAWINGS

An embodiment of the invention will be described with reference to the following drawings:
Figure 1 is a perspective view of a connection according to the invention.
Figure 2 is a perspective view of a slotted plate according to the invention.
Figures 3A and 3B are perspective views of connectors according to the present invention.
Figure 3C is an elevation view of the connector of Figure 3A.
Figure 4 is a plan view of a connection according to the present invention.
Figures 5A and 5B are partially cross-section elevations of a connection according to the present invention.
Figure 6 is a perspective view of a cable assembly connection used with an adjustable lumbar basket according to the present invention.

### DESCRIPTION OF PREFERRED EMBODIMENTS

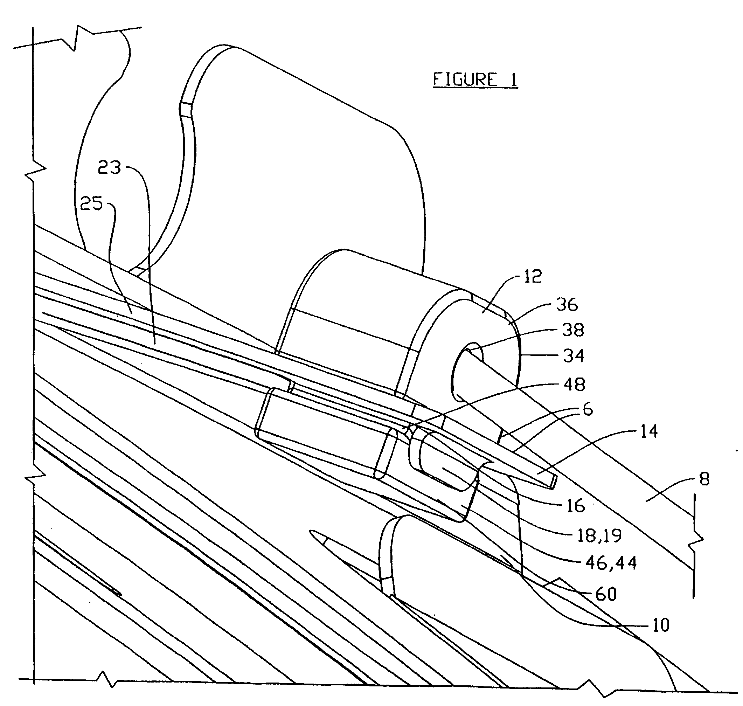

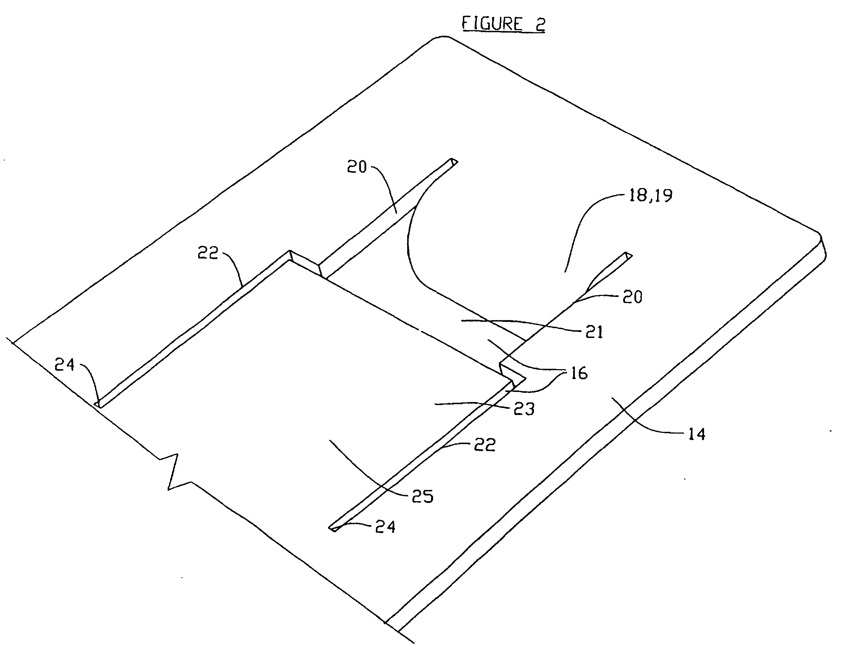

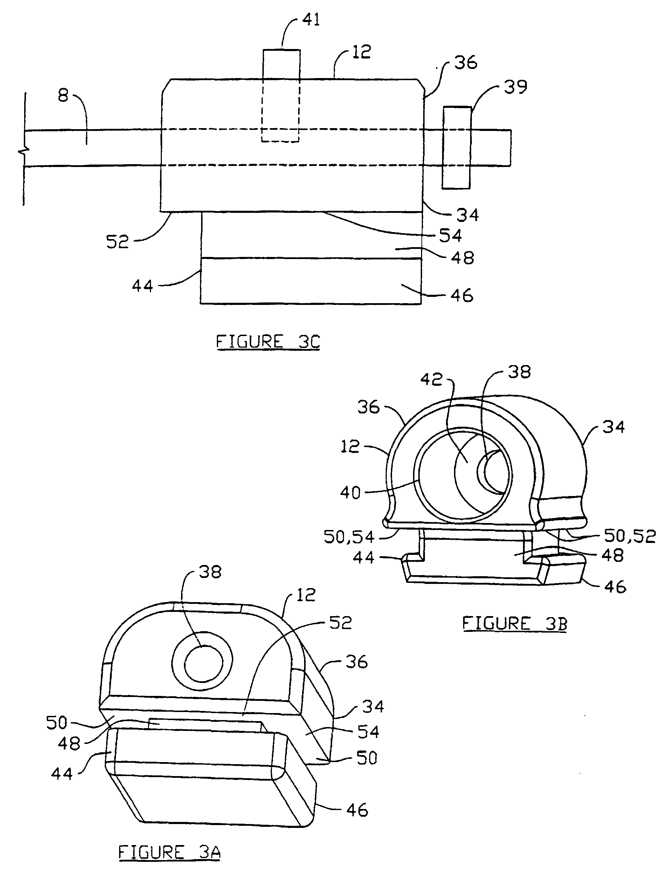

Referring now to Figure 1, a connection 6 is shown between a tensile element 8 and an object 10. The connection 6 has a connector 12 and a plate 14. The connector 12 is shown separately in Figures 3A and 3B and the plate 14 is shown separately in Figure 2.

Referring now to Figure 2, the plate 14 has a slot 16 having a stop 18 at a first end 19. Adjacent to the first end 19 are first edges 20 on the perimeter of a first part 21 of the slot 16. Adjacent to the first part 21 of the slot 16 are second edges 22 of the slot 16 on the perimeter of a second part 23 of the slot 16. A second end 24 of the slot 16 is at the end of the slot 16 opposite the first end 19.

The dimensions of the slot 16 and other parts of the embodiment will be described according to the following frame of reference. Length is measured along a line extending from the first end 19 of the slot 16 to the second end 24 of the slot 16 and generally parallel to the first edges 20 and second edges 22. Width is measured perpendicular to the length in a plane parallel to the plate 14. Depth or thickness is measured perpendicular to length and width. When referring to the slot 16, where a stop 18 protrudes into the space within or adjacent the slot 16, measurements are made from the stop 18 and not from the edge of the slot 16. References to dimensions of the connector 12 follow the same frame of reference when the connector 12 is engaged in the plate 14 as shown in Figure 1.

Referring now to Figures 1 and 2, the stop 18 provides a bearing surface for the connector 12 on the plate 14. For low stress applications, the stop 18 may be simply an edge of the plate 14 but a stop as shown provides additional bearing area and is preferred. When formed of a resilient material with a sufficient radius of curvature, the stop 18 can also cushion shocks to the connector 12 or plate 14.

The stop 18 is preferably made as part of a unitary construction with the plate 14 by cutting out the slot 16 so as to leave a portion of the plate 14 attached to one edge of the first part 21 of the slot 16. This piece of the plate 14 is then bent upwards or downwards to form the stop 18. The plate 14 is preferably formed of a resilient material that can nevertheless be formed by bending it beyond its elastic limit, or by the application of heat etc. Sheet steel, aluminum or various plastics, for example, may be appropriate for different applications.

The stop 18 as shown in Figures 1 and 2 is located at the first end 19 of the slot 16. In this location, the stop 18 provides additional bearing area to resist forces applied by a tensile element aligned with the length of the slot 16. If the connection 6 will be used to transfer forces perpendicular to the length of the slot, then the stop 18 would be located on one of the first edges 20.

Now referring to Figure 2, a retainer 25 is shown which obscures part of the space in or adjacent to the second part 23 of the slot 16. Although the retainer 25 is preferably in the plane of the plate 14, the word "adjacent" is meant to indicate that the retainer 25 could be located in a similar location in parallel planes above or below the plate 14 which are close enough to the plate 14 to allow the retainer to perform its functions.

The functions of the retainer 25 will be described in more detail further below but include inhibiting the connector 12, when engaged to the plate 14, from moving towards the second part 23 of the slot 16 where it might disengage from the slot 16.

Although the retainer 25 may be a separate component, it is preferably a unitary construction with the plate 14. Like the stop 18, the retainer 25 can be a part of the plate 14 made by cutting out the slot 16 so as to leave a portion of the plate 14 attached to one edge of the second part 23 of the slot 16. The retainer 25 can be attached to either of the second edges 22 but is preferably attached to the second end 24 of the slot 16.

Referring now to Figures 3A and 3B, two versions of a connector 12 are shown. Each connector 12 has a body 34 with a first end 36 engageable with a tensile element. In the connector 12 of Figure 3A, the first end 36 has a hole 38 for insertion of a tensile element. Preferably, the connector 12 is a casting with the tensile element cast in place in the hole 38 or made to tolerances such that the tensile element 8 is a friction fit in the hole 38. However, many alternate methods might be appropriate for different applications. For example, as shown in Figure 3C, the tensile element 8 can be pushed through the hole 38 and provided with a collet, nut, or other obstruction 39 on its end to keep it from passing back out through the hole. In other applications, the tensile element 8 can be held in the hole by a set screw or pin 41 or by crimping the connector 12. In the connector 12 of Figure 3B, the first end 36 is adapted to receive a tensile element which is the conduit part of a cable assembly. In this case, the hole 38 is sized to permit the cable to pass through it. A second countersunk hole 40 is sized to accept the end of the conduit to hold it in position and provide a bearing surface 42 for the end of the conduit. The preferred material for the connector 12 is primarily chosen based on the force to be applied to it and compatibility with the plate 14 and tensile element 8 and may be, for example, steel, aluminum or plastic.

Referring still to Figures 3A and 3B, a second end 44 of the connector has a lower abutment 46, a post 48 and an upper abutment 50. The lower abutment 46 extends from the second end to be wider than the post 48. The upper abutment 50 has two principle surfaces. A first surface 52 extends from the second end 44 in a direction parallel with the axis of the hole 38. Second surfaces 54 extend from the second end 44 to be wider than the post 48.

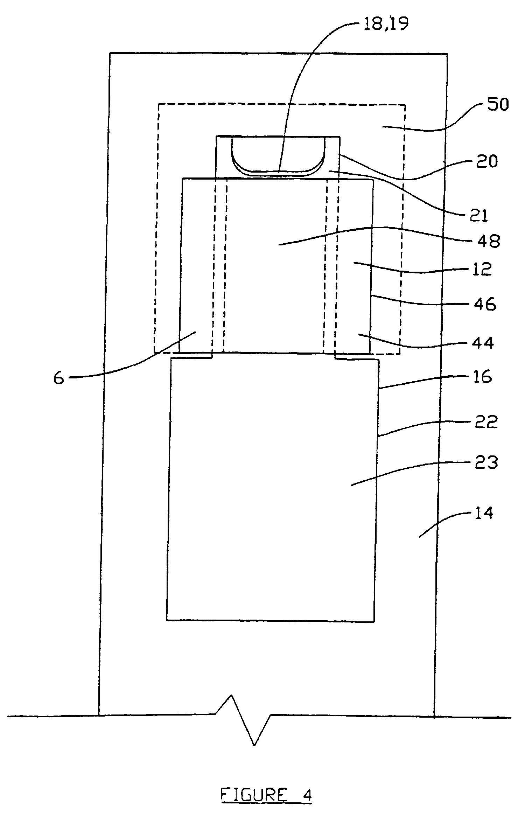

Referring now to Figure 4, a portion of the plate 14 is shown without the retainer 25 and with a connector 12 engaged to the plate 14 in the area of the first part 21 of the slot 16. The second part 23 of the slot 16 is wider than the first part 21 of the slot 16. The second end 44 of the connector 12 is shown protruding through the plate 14 and covering a portion of the first part 21 of the slot 16. The width of the lower abutment 46 is less than the width of the second part 23 of the slot 16 so that the lower abutment 46 can pass through the second part 23. Conversely, the width of the lower abutment 46 is greater than the width of the first part 21 of the slot 16 so that lower abutment 46 will engage the plate 14 in the area of the first part 21. Preferably, the upper abutment 50, shown in dashed lines, is also greater in width than the first part 21 of the slot 16 to keep the connector 12 from falling through the plate 14. More preferably, the upper abutment 50 is also greater in width than the second part 23 of the slot 16 to keep the connector 12 from falling through the plate 14 when the lower abutment 46 is passed through the second part 23 of the slot 16. The post 48 is narrower than the first part 21 of the slot 16 to allow the connector 12 to slide from the second part 23 to the first part 21 of the slot 16. Similarly, the lower abutment 46 and upper abutment 50 are spaced apart from each other by at least the thickness of the plate 14 to allow the connector 12 to slide from the second part 23 to the first part 21 of the slot 16.

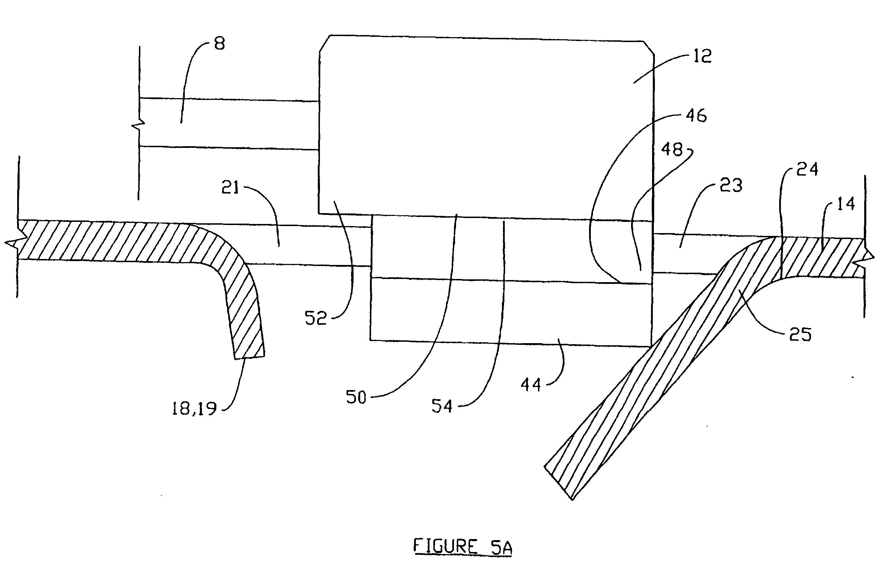

Now referring to Figures 5A, the connector 12 is shown being inserted into the second part 23 of the slot 16. The retainer 25 is deflected downwards by the second end 44 of the connector 12 which is inserted until the lower abutment 46 has passed through the plate 14. The length of the second part 23 of the slot 16 is longer than the length of the lower abutment 46 so that the retainer 25 can bend without becoming permanently deformed.

Now referring to Figure 5B, the connector has been slid to engage the first part 21 of the slot 16. A front face 60 of the connector 12 contacts the stop 18 when force is applied to the tensile element 8. Moment forces created by the tensile element 8 are resisted by a combination of contact between the lower abutment 46 and upper abutment 50 on opposite sides of the plate 14. The upper abutment 50 may contact the plate 14 at the first surface 52, the second surface 54, or both. The size of the moment forces created by the tensile element 8 can be reduced by locating the tensile element 8 in the connector 12 such that the tensile element 8 is close to the plate 14 or in the plane of the plate 14 when the connector 12 is engaged with the plate 14.

Still referring to Figure 5B, the retainer 25 has sprung back into the plane of the plate 14. The connector 12 is now inhibited from moving back towards the second part 23 of the slot 16 which might allow it to disengage from the plate 14. However, if an operator wants to disassemble the connection, the retainer 25 can be forced downwards to allow the connector 12 to slide towards the second part 23 of the slot 16.

The length of the second end 44 of the connector 12 is defined as the length between the front face 60 and the distal edge of the post 48. Preferably, the length of the second end 44 of the connector 12 and the length of the retainer 25 are such that there is little space between the post 48 and the retainer 25. In this way, the connector 12 has only a very limited range of movement and, if force is applied in a reverse direction, the retainer 25 keeps the connector 12 from moving backwards in the slot 16 and disengaging the plate 14.

More preferably, the length of the second end 44 of the connector 12 is substantially the same as the length of the first part 21 of the slot 16 and the retainer 25 is substantially as long as the second part 23 of the slot 16. Similarly, if the retainer 25 were attached to one of the second edges 22, then it would be preferable for the retainer 25 to be located so as to at least partially obscure the boundary between the first part 21 and the second part 23 of the slot 16.

The distances between the upper abutment 42 and the lower abutment 44 can also be chosen to be only slightly larger than the thickness of the plate 14. Alternatively, the distance between the upper abutment 42 and the lower abutment 44 can be chosen greater than the thickness of the plate 14 so that the connector 12 can rotate forward slightly by a fixed amount. The fixed amount of rotation allows the connector 12 to be rotated as it slides into the slot 16 which reduces the total amount of deflection required of the retainer 25.

In an embodiment shown in Figure 5B, the lower abutment 46 has a surface which extends from the post 48 in the direction of the retainer 25 so that when the connector 12 is engaged in the slot 16, the retainer 25 is prevented from moving downwards to release the connector 12. To install and release the connector 12, the connector is pushed against the stop 18 to deform the stop 18 enough to allow the retainer 25 to pass by the lower abutment 46. The stop 18 is biased to move the connector 12, when the connector 12 is engaged to the plate 14, to a position where the retainer 25 is prevented from moving downwards to release the connector 12.

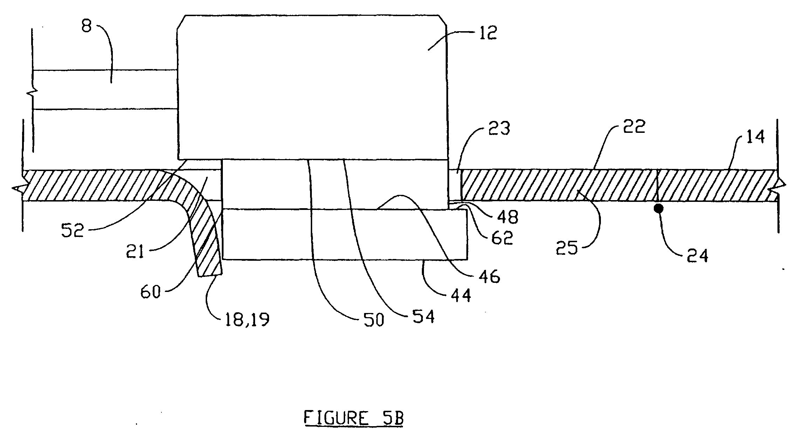

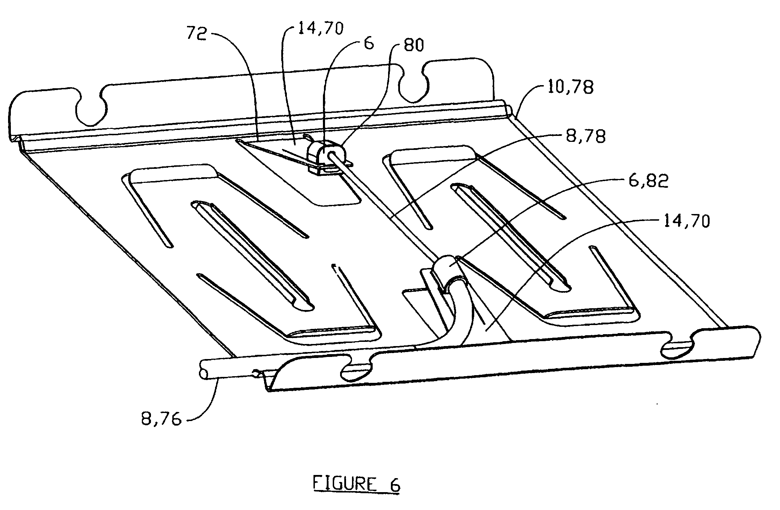

Now referring to Figures 1 and 6, ideally, the plate 14 is preferably part of the object 10 where the object that is formed of a sheet material in the area of the connection 6. In such a case, the plate 14 can be a non-distinct part of the object 10 or a tab 70 extending from the object 10 along a fold line 72. Where the tensile element 8 is partially perpendicular to the fold line 72, the tab 70 may pivot in response to changing forces on the tab 70.

Referring now to Figure 6, connections 6 are shown between a cable 74 and a first end of a basket 78 of a lumbar support for a seat and between a conduit 76 and a second end of the basket 78. A connection 6 as shown in Figure 3A is used at the cable end connection 80 and a connection 6 as shown in Figure 3B is used at the conduit end connection 82. When the cable 74 is retracted into the conduit 76, the length of cable 74 between the two connections 6 is shortened. The basket 78, preferably made of a resilient sheet material, is compressed causing it to bow outwards to provide lumbar support. As the basket 78 bows outwards, the tabs 70 may also curve in response to the changing angle between the cable 74 and the first and second ends of the basket 78.

In this embodiment, the plates 14 are not separate elements, but rather a portion of the basket 78 which reduces the number of parts required. A living hinge is created in the plate 14 or between the plate 14 and the basket 78 allowing the basket 78 to curl with minimal rotation of the tensile element 8 relative to the connector 12.

The length of cable 74 that can extend from the conduit 76 can be chosen such that there is at least a slight curl to the basket 78 at all times. The slight curl keeps the cable 74 in tension which inhibits the connectors 12 from disengaging the slots 16 and may make retainers 25 unnecessary. Further, the basket 78 is most difficult to bend when it is flat or nearly flat. A slight curl in the basket 78 when the basket 78 is in its most flattened position reduces the tensile force required to move the basket 78 from this position and the maximum tensile force which an operator will have to apply to the basket 78 to move it. The tensile force required to move the basket 78 can also be lessened by locating the tensile element 8 in the connector 12 such that it is as far away from the plate 14 as possible when the connector 12 is engaged in the plate 14.

## Claims

1. A connection between a tensile element and an object having a plate, comprising
(a) a slot (16) in the plate (14), the slot (16) having a first part (21) and a second part (23);
(b) a connector (12) having a first end (36) engageable with the tensile element (8) and a second end (44), the second end (44) being slidably engageable with the plate ( 14) by inserting the second end (44) of the connector (12) into the second part (23) of the slot (16) and sliding it generally from the second part (23) of the slot (16) to the first part (21) of the slot (16), the second end (44) of the connector (12) having an upper abutment (50) and a lower abutment (46), the upper abutment (50) being engageable with the plate (14) on a side opposite a side of the plate (14) engageable by the lower abutment (46); and
(c) a retainer (25), the retainer (25) inhibiting movement of the engaged connector (12) from the first part (21) of the slot (16) to the second part (23) of the slot (16),
**characterized in that**
the upper abutment (50) of the second end (44) of the connector (12) is wider than the second part (23) of the slot (16) or wider than the lower abutment (46) of the second end (44) of the connector (12).

2. The connection of claim 1 wherein the retainer (25) is resilient and biased towards a position where it at least partially obscures the space in or adjacent to the second part (23) of the slot (16).

3. The connection of claim 1 or claim 2 wherein the retainer (25) is part of the plate (14).

4. The connection of claim 3 wherein the retainer (25) obscures substantially all of the space in or adjacent to the second part (23) of the slot (16).

5. The connection of any one of claims 1-4 wherein the second part (23) of the slot (16) is wider than the first part (21) of the slot (16).

6. The connection of any one of claims 1-5 wherein the lower abutment (46) is wider than the first part (21) of the slot (16) and less wide than the second part (23) of the slot (16).

7. The connection of any one of claims 1-6 wherein the upper abutment (50) is provided at a distance from the lower abutment (46) greater than the thickness of the plate (14) and the upper abutment (50) is wider than the first part (21) of the slot (16).

8. The connection of any one of claims 1-7 wherein the upper abutment (50) projects from the connector (12).

9. The connection of any one of claims 1-8 wherein the plate (14) and the retainer (25) are a unitary construction.

10. The connection of any one of claims 1-9 wherein the plate (14) is attached to the object (10) by a hinge.

11. The connection of any one of claims 1-9 wherein the plate (14) is a pivotable tab (70) of the object (10).

12. The connection of any one of claims 1-11 wherein the plate (14) is made of a unitary construction with the object (10).

13. The connection of any one of claims 1-12 wherein the object (10) is a basket (78) for providing lumbar support in a seat and the basket (78) has a first end and a second end, the first end has a connection (6, 80) for a tensile element which is a cable (74) and the second end has a connection (6, 82) for a tensile element which is a conduit (76) for the cable (74).

14. The connection of claim 13 wherein a joint between the plate (14) and the basket (78) is substantially perpendicular to the cable (74).

15. The connection of any one of claims 1-14 wherein the tensile element (8) is generally aligned with the length of the slot (16).

16. The connection of any one of claims 1-15 wherein the first part (21) of the slot (16) has a first end (19) opposite the second part (23) of the slot (16), the first end (19) having a stop (18) made of a unitary construction with the plate (14).

17. The connection of claim 16 wherein the length of the second end (19) of the connector (12) is substantially equal to the length of the first part (21) of the slot (16) and the retainer (25) at least partially obscures the second part (23) of the slot (16) substantially adjacent to the boundary between the first part (21) of the slot (16) and the second part (23) of the slot (16).

18. The connection of claim 16 or claim 17 wherein the retainer (25) is attached to the plate (14) at a second end (24) of the slot (16) opposite the first end (19) of the slot (16).

19. The connection of any one of claims 1-18 wherein the second part (23) of the slot (16) is longer than the lower abutment (46).

20. The connection of any one of claims 1-19 wherein the retainer (25) is substantially the length of the second part (23) of the slot (16).

21. The connection of any one of claims 1-20 wherein first part (21) of the slot (16) has a stop ( 18) opposite the second part (23) of the slot (16), the stop (18) being resilient to bias the connector (12) against the retainer (25).

22. The connection of claim 21 wherein the lower abutment (46) inhibits downward motion of the retainer (25) while the connector (12) is biased against the retainer (25) by the stop (18).

23. The connection of claim 21 or claim 22 wherein the connector (12) is releasable by first moving the connector (12) against the bias of the stop (18) and then pressing the retainer (25) past the lower abutment (46).

24. The connection of any one of claims 21-23 wherein the stop (18) is made of a unitary construction with the plate (14).

25. The connection of any one of claims 21-24 wherein the connector (12) is releasable by first pressing the retainer (25) against its bias to allow the connector (12) to slide from the first part (21) of the slot (16) to the second part (23) of the slot (16).

## Patentansprüche

1. Verbindung zwischen einem Zugelement und einem Objekt, das eine Platte aufweist, umfassend
(a) einen Schlitz (16) in der Platte (14), wobei der Schlitz (16) einen ersten Teil (21 ) und einen zweiten Teil (23) aufweist;
(b) einen Verbinder (12), der ein erstes Ende (36), das mit dem Zugelement (8) verbindbar ist, und ein zweites Ende (44) aufweist, wobei das zweite Ende (44) durch Verschieben mit der Platte (14) einrastbar ist, indem das zweite Ende (44) des Verbinders (12) in den zweiten Teil (23) des Schlitzes (16) eingesetzt und allgemein von dem zweiten Teil (23) des Schlitzes (16) zu dem ersten Teil (21) des Schlitzes (16) verschoben wird, wobei das zweite Ende (44) des Verbinders (12) eine obere Angrenzung (50) und eine untere Angrenzung (46) aufweist, und wobei die obere Angrenzung (50) in die Platte (14) auf einer Seite eingreifen kann, welche gegenüber zu einer Seite der Platte (14) liegt, die in die untere Angrenzung (46) eingreifen kann, und
(c) einen Halter (25), wobei der Halter (25) eine Bewegung des eingerasteten Verbinders (12) von dem ersten Teil (21) des Schlitzes (16) zu dem zweiten Teil (23) des Schlitzes (16) verhindert,
**dadurch gekennzeichnet,**
**dass** die obere Angrenzung (50) des zweiten Endes (44) des Verbinders (12) breiter ist als der zweite Teil (23) des Schlitzes (16) oder breiter als die untere Angrenzung (46) des zweiten Endes (44) des Verbinders (12).

2. Verbindung nach Anspruch 1, wobei der Halter (25) federnd ist und in Richtung einer Position vorgespannt, wo er zumindest teilweise einen Freiraum in oder benachbart dem zweiten Teil (23) des Schlitzes (16) verdeckt.

3. Verbindung nach Anspruch 1 oder Anspruch 2, wobei der Halter (25) ein Teil der Platte (14) ist.

4. Verbindung nach Anspruch 3, wobei der Halter (25) im Wesentlichen den gesamten Freiraum in oder benachbart dem zweiten Teil (23) des Schlitzes (16) verdeckt.

5. Verbindung nach einem der Ansprüche 1 - 4, wobei der zweite Teil (23) des Schlitzes (16) breiter ist als der erste Teil (21) des Schlitzes (16).

6. Verbindung nach einem der Ansprüche 1 - 5, wobei die untere Angrenzung (46) breiter als der erste Teil (21) des Schlitzes (16) und weniger breit als der zweite Teil (23) des Schlitzes (16) ist.

7. Verbindung nach einem der Ansprüche 1 - 6, wobei die obere Angrenzung (50) in einem Abstand von der unteren Angrenzung (46) bereitgestellt ist, der größer als die Dicke der Platte (14) ist, und wobei die obere Angrenzung (50) breiter ist als der erste Teil (21) des Schlitzes (16).

8. Verbindung nach einem der Ansprüche 1 - 7, wobei die obere Angrenzung (50) aus dem Verbinder (12) herausragt.

9. Verbindung nach einem der Ansprüche 1 - 8, wobei die Platte (14) und der Halter (25) eine einheitliche Konstruktion sind.

10. Verbindung nach einem der Ansprüche 1 - 9, wobei die Platte (14) mittels eines Gelenkteils an dem Objekt (10) angebracht ist.

11. Verbindung nach einem der Ansprüche 1 - 9, wobei die Platte (14) eine schwenkbarer Lasche (70) des Objekts (10) ist.

12. Verbindung nach einem der Ansprüche 1 - 11, wobei die Platte (14) aus einer einheitlichen Konstruktion mit dem Objekt (10) gebildet ist.

13. Verbindung nach einem der Ansprüche 1 - 12, wobei das Objekt (10) ein Korb (78) zur Bereitstellung einer Lordosenstützung in einem Sitz ist, und der Korb (78) ein erstes Ende und ein zweites Ende aufweist, das zweite Ende eine Verbindung (6, 80) für ein Zugelement aufweist, bei welchem es sich um ein Kabel (74) handelt, und das zweite Ende eine Verbindung (6, 82) für ein Zugelement aufweist, bei welchem es sich um eine Führung (76) für das Kabel (74) handelt.

14. Verbindung nach Anspruch 13, wobei eine Verbindung zwischen der Platte (14) und dem Korb (78) im Wesentlichen senkrecht zu dem Kabel (74) ist.

15. Verbindung nach einem der Ansprüche 1 - 14, wobei das Zugelement (8) im Wesentlichen längs des Schlitzes (16) ausgerichtet ist.

16. Verbindung nach einem der Ansprüche 1 - 15, wobei der erste Teil (21) des Schlitzes (16) ein erstes Ende (19) gegenüber dem zweiten Teil (23) des Schlitzes (16) aufweist, wobei das erste Ende (19) einen Anschlag (18) aufweist, der aus einer einheitlichen Konstruktion mit der Platte (14) gebildet ist.

17. Verbindung nach Anspruch 16, wobei die Länge des zweiten Endes (44) des Verbinders (12) im Wesentlichen gleich der Länge des ersten Teils (21) des Schlitzes (16) ist, und der Halter (25) zumindest teilweise den im Wesentlichen zu der Grenze zwischen dem ersten Teil (21) des Schlitzes (16) und dem zweiten Teil (23) des Schlitzes (16) benachbarten zweiten Teil (23) des Schlitzes (16) verdeckt.

18. Verbindung nach Anspruch 16 oder 17, wobei der Halter (25) an einem zweiten Ende (24) des Schlitzes (16) gegenüber dem ersten Ende (19) des Schlitzes (16) an der Platte (14) angebracht ist.

19. Verbindung nach einem der Ansprüche 1 - 18, wobei der zweite Teil (23) des Schlitzes (16) länger als die untere Angrenzung (46) ist.

20. Verbindung nach einem der Ansprüche 1 - 19, wobei der Halter (25) im Wesentlichen die Länge des zweiten Teils (23) des Schlitzes (16) hat.

21. Verbindung nach einem der Ansprüche 1 - 20, wobei der erste Teil des Schlitzes (16) einen Anschlag (18) gegenüber dem zweiten Teil (23) des Schlitzes (16) aufweist, wobei der Anschlag (18) federnd ist, um den Verbinder (12) gegen den Halter (25) vorzuspannen.

22. Verbindung nach Anspruch 21, wobei die untere Angrenzung (46) eine Abwärtsbewegung des Halters (25) verhindert, während der Verbinder (12) durch den Anschlag (18) gegen den Halter (25) vorgespannt ist.

23. Verbindung nach Anspruch 21 oder Anspruch 22, wobei der Halter (12) lösbar ist, indem zuerst der Verbinder (12) gegen die Vorspannung des Anschlags (18) bewegt und dann der Halter (25) hinter die untere Angrenzung (46) gedrückt wird.

24. Verbindung nach einem der Ansprüche 21 - 23, wobei der Anschlag (18) aus einer einheitlichen Konstruktion mit der Platte (14) gebildet ist.

25. Verbindung nach einem der Ansprüche 21 - 24, wobei der Verbinder (12) lösbar ist, indem zuerst der Halter (25) gegen seine Vorspannung gedrückt wird, um dem Verbinder (12) zu ermöglichen, von dem ersten Teil (21) des Schlitzes (16) zu dem zweiten Teil (23) des Schlitzes (16) zu gleiten.

## Revendications

1. Liaison entre un élément de tension et un objet comportant une plaque, comprenant
(a) une fente (16) dans la plaque (14), la fente (16) comportant une première partie (21 ) et une seconde partie (23) ;
(b) un connecteur (12) ayant une première extrémité (36) pouvant venir en prise avec l'élément de tension (8) et une seconde extrémité (44), la seconde extrémité (44) pouvant venir en prise de façon coulissante avec la plaque (14) en introduisant la seconde extrémité (44) du connecteur (12) dans la seconde partie (23) de la fente (16) et en la faisant coulisser de façon générale de la seconde partie (23) de la fente (16) jusqu'à la première partie (21) de la fente (16), la seconde extrémité (44) du connecteur (12) comportant une butée supérieure (50) et une butée inférieure (46), la butée supérieure (50) pouvant venir en prise avec la plaque (14) sur une face opposée à une face de la plaque (14) avec laquelle la butée inférieure (46) peut venir en prise ; et
(c) un élément de retenue (25), l'élément de retenue (25) empêchant le mouvement du connecteur en prise (12) de la première partie (21) de la fente (16) jusqu'à la seconde partie (23) de la fente (16),
**caractérisé en ce que**
la butée supérieure (50) de la seconde extrémité (44) du connecteur (12) est plus large que la seconde partie (23) de la fente (16) ou plus large que la butée inférieure (46) de la seconde extrémité (44) du connecteur (12).

2. Liaison selon la revendication 1, dans laquelle l'élément de retenue (25) est élastique et poussé vers une position où il masque au moins partiellement l'espace situé dans ou adjacent à la seconde partie (23) de la fente (16).

3. Liaison selon la revendication 1 ou la revendication 2, dans laquelle l'élément de retenue (25) fait partie de la plaque (14).

4. Liaison selon la revendication 3, dans laquelle l'élément de retenue (25) masque sensiblement la totalité de l'espace situé dans ou adjacent à la seconde partie (23) de la fente (16).

5. Liaison selon l'une quelconque des revendications 1 à 4, dans laquelle la seconde partie (23) de la fente (16) est plus large que la première partie (21 ) de la fente (16).

6. Liaison selon l'une quelconque des revendications 1 à 5, dans laquelle la butée inférieure (46) est plus large que la première partie (21 ) de la fente (16) et moins large que la seconde partie (23) de la fente (16).

7. Liaison selon l'une quelconque des revendications 1 à 6, dans laquelle la butée supérieure (50) est disposée à une distance de la butée inférieure (46) supérieure à l'épaisseur de la plaque (14) et la butée supérieure (50) est plus large que la première partie (21) de la fente (16).

8. Liaison selon l'une quelconque des revendications 1 à 7, dans laquelle la butée supérieure (50) fait saillie à partir du connecteur (12).

9. Liaison selon l'une quelconque des revendications 1 à 8, dans laquelle la plaque (14) et l'élément de retenue (25) sont construits d'un seul tenant.

10. Liaison selon l'une quelconque des revendications 1 à 9, dans laquelle la plaque (14) est fixée à l'objet (10) par une articulation.

11. Liaison selon l'une quelconque des revendications 1 à 9, dans laquelle la plaque (14) est une patte pivotante (70) de l'objet (10).

12. Liaison selon l'une quelconque des revendications 1 à 11, dans laquelle la plaque (14) est construite d'un seul tenant avec l'objet (10).

13. Liaison selon l'une quelconque des revendications 1 à 12, dans laquelle l'objet (10) est un filet (78) destiné à constituer un support lombaire dans un siège et le filet (78) comporte une première extrémité et une seconde extrémité, la première extrémité comporte une liaison (6, 80) pour un élément de tension qui est un câble (74) et la seconde extrémité comporte une liaison (6, 82) pour un élément de tension qui est une conduite (76) pour le câble (74).

14. Liaison selon la revendication 13, dans laquelle une jonction entre la plaque (14) et le filet (78) est sensiblement perpendiculaire au câble (74).

15. Liaison selon l'une quelconque des revendications 1 à 14, dans laquelle l'élément de tension (8) est généralement aligné avec la longueur de la fente (16).

16. Liaison selon l'une quelconque des revendications 1 à 15, dans laquelle la première partie (21) de la fente (16) comporte une première extrémité (19) opposée à la seconde partie (23) de la fente (16), la première extrémité (19) comportant une butée (18) construite d'un seul tenant avec la plaque (14).

17. Liaison selon la revendication 16, dans laquelle la longueur de la seconde extrémité (19) du connecteur (12) est sensiblement égale à la longueur de la première partie (21) de la fente (16) et l'élément de retenue (25) masque au moins partiellement la seconde partie (23) de la fente (16) sensiblement adjacente à la limite entre la première partie (21) de la fente (16) et la seconde partie (23) de la fente (16).

18. Liaison selon la revendication 16 ou la revendication 17, dans laquelle l'élément de retenue (25) est fixé à la plaque (14) à une seconde extrémité (24) de la fente (16) opposée à la première extrémité (19) de la fente (16).

19. Liaison selon l'une quelconque des revendications 1 à 18, dans laquelle la seconde partie (23) de la fente (16) est plus longue que la butée inférieure (46).

20. Liaison selon l'une quelconque des revendications 1 à 19, dans laquelle l'élément de retenue (25) est sensiblement de la longueur de la seconde partie (23) de la fente (16).

21. Liaison selon l'une quelconque des revendications 1 à 20, dans laquelle la première partie (21 ) de la fente (16) comporte une butée (18) opposée à la seconde partie (23) de la fente (16), la butée (18) étant élastique pour pousser le connecteur (12) contre l'élément de retenue (25).

22. Liaison selon la revendication 21, dans laquelle la butée inférieure (46) empêche un mouvement vers le bas de l'élément de retenue (25) pendant que le connecteur (12) est poussé contre l'élément de retenue (25) par la butée (18).

23. Liaison selon la revendication 21 ou la revendication 22, dans laquelle le connecteur (12) peut être libéré en déplaçant d'abord le connecteur (12) à l'encontre de la poussée de la butée (18), puis en appuyant sur l'élément de retenue (25) en passant par la butée inférieure (46).

24. Liaison selon l'une quelconque des revendications 21 à 23, dans laquelle la butée (18) est construite d'un seul tenant avec la plaque (14).

25. Liaison selon l'une quelconque des revendications 21 à 24, dans laquelle le connecteur (12) peut être libéré en appuyant d'abord sur l'élément de retenue (25) à l'encontre de sa poussée pour permettre au connecteur (12) de coulisser de la première partie (21) de la fente (16) jusqu'à la seconde partie (23) de la fente (16).
